# EUROPÄISCHE PATENTSCHRIFT

(11) **EP 1 387 775 B1**
(45) Veröffentlichungstag und Bekanntmachung des Hinweises auf die Patenterteilung: **28.07.2004**
(21) Anmeldenummer: 02740366.6
(22) Anmeldetag: 17.05.2002
(51) Int. Cl.: B60J 7/06

(54) **FAHRZEUGAUFBAU**
VEHICLE STRUCTURE
STRUCTURE DE VEHICULE

(30) Priorität: 17.05.2001 DE 10124283
(43) Veröffentlichungstag der Anmeldung: 11.02.2004
(73) Patentinhaber: Edscha LKW-Schiebeverdecke GmbH, 42855 Remscheid (DE)
(72) Erfinder: REMMEL, Roger, 42897 Remscheid (DE)
(74) Vertreter: Sparing, Rolf Klaus
(86) Internationale Anmeldenummer: PCT/DE2002/001827
(87) Internationale Veröffentlichungsnummer: WO 2002/092370

(56) Entgegenhaltungen:
- EP-A- 0 846 613
- DE-A- 19 756 865

## Beschreibung

Die Erfindung betrifft einen Fahrzeugaufbau nach dem Oberbegriff des Anspruchs 1.

Bei aus der Praxis bekannten Straßen- und Schienenfahrzeugen sowie Containern soll die Ladung möglichst sicher transportiert werden. Außerdem soll das, Beladen und Entladen möglichst schnell vonstatten gehen, um das Fahrzeug usw. möglichst bald wieder seiner Transportfunktion zuführen zu können. Gängige Fahrzeugaufbauten, die das Freigeben der Ladepritsche ermöglichen, sind Schiebebügelverdecke oder Schiebeverdecke. Eine schwere, bewegliche Ladung kann und muß auch im Boden der Ladefläche verankert werden. Dies ist jedoch nicht bei allen Ladegütem, z.B. bei leichteren Stückgütern, wie z.B. Paketen, möglich oder doch zumindest mit einem erhöhten Arbeitsaufwand verbunden, wie er z.B. bei der Verwendung von Netzen vorliegt. Ein Verlagern der Ladegüter kann beim Durchfahren von engen Kurven erfolgen, wenn die ungesicherte Ladung mit bis etwa die Hälfte ihres Gewichts auf die Seitenwand des Aufbaus drückt. Es wurde festgestellt, daß relativ flexible Seitenwände, wie verstärkte Planen, sich in derartigen Fällen bis zu 50 cm seitlich durchbiegen können.

Aus der Praxis sind Dächer mit einem Seilgeflecht im Verdeckgestell bekannt. Femer sind aus der Praxis verstärkte Dachplanen bekannt. Diese leiten angreifende Kräfte jedoch nicht sicher ab, sondern sind zu elastisch, verschleißanfällig und teuer.

WO 00 12 337 A1 beschreibt ein als Schiebebügelverdeck ausgebildeten Fahrzeugaufbau, bei dem Schiebebügel in Gestalt eines Umgedrehten U entlang beiden Längsseiten einer Ladepritsche verlagerbar sind und im wesentliche die Ladefläche überspannen. Ein solcher Fahrzeugaufbau ist zwar bezüglich der Lademöglichkeiten flexibel, bei Verrutschen der Ladung werden aber die seitlichen Wandungen des Fahrzeugaufbaus stark ausgebogen.

WO 00 12 334 A1 beschreibt ein Schiebeverdeck, bei dem Spriegel über Rollen entlang von Längsträgem, die an der Ladepritsche über Rungen abgestützt sind, zur Freigabe einer Dachöffnung verlagerbar sind. Femer können Seitenplanen an den Längsträgem verschiebbar aufgehangen werden. Aufgrund der Erstreckung der Runge wirkt die Last im Dachbereich mit einem großen Hebel auf den Längsträger, insbesondere in dessen Mittenbereich. Bei Längsträgem, die aus mehreren hintereinander angeordneten und jeweils an Rungen abgestützten Abschnitten von Längsträger-Profilen gebildet sind ist die Abstützung an stärkeren Querträgem unzureichend, um die Längsträger auszusteifen, weshalb die Ausbiegung unzulässig hohe Werte erreicht.

EP 0 936 093 A1 zeigt ein Schiebebügelverdeck, bei dem im Bereich der Seitenwände und des Dachs starre Versteifungsstreben über Kreuz zwischen benachbarten Schiebebügeln angeordnet sind, wobei wenigstens ein Ende der Versteifungselemente in einer Führung derart verlagerbar ist, daß benachbarte Schiebebügel in Anlage miteinander gelangen können. Eine Übertragung von auf die Seitenwände nach außen einwirkenden Gewichtskräften ist mit diesen Versteifungselementen nicht möglich.

DE 197 56 865 A1 beschreibt einen Fahrzeugaufbau, bei dem ein Verdeckgestell aus gegen die Ladepritsche durch Rungen abgestützten Längsträgern einen Laderaum überspannt, wobei eine Dachplane zur Abdeckung einer Dachöffnung auf die beiden Längsträger überspannenden Spriegeln befestigt ist und femer jeweils Seitenplanen in die Längsträger eingehangen werden können. Zur Vermeidung einer seitlichen Durchbiegung sind starre Zwischenböden in die Rungen eingehängt, die den Fahrzeugaufbau aussteifen. Femer weist der Fahrzeugaufbau eine aufwendige Anordnung von Aussteifungselementen auf, die als Kette oder Seil ausgebildet sind und die einerseits an einem festen Dachteil montiert sind und andererseits an einem entlang des Dachlängsrandes beweglichen Wagen befestigt, in der Regel an einem etwas breiteren Endlaufspriegel, der die Parallelführung der Spriegel bewirken soll. Diese Aussteifungselemente werden dabei mehrfach von der einen Seite zur jeweils anderen Seite des Verdeckgestells die Laderaumfläche diagonal überspannend an den Spriegeln umgelenkt, wobei je zwei diagonal verlaufende Aussteifungselemente an den beiden Enden desselben Spriegels umgekenkt werden und das Aussteifungselement mit seinen beiden Enden im Bereich ein mal des einen und einmal des anderen der beiden Längsträger angreift. Weiterhin sind weitere Aussteifungselemente parallel zu den Längsträgern in Ringösen gespannt, in denen auch die diagonal verlaufenden Aussteifungselemente umgelenkt werden. Aufgrund der großen Länge der Aussteifungselemente und weil diese zur Aufnahme aller Kräfte auszulegen sind haben die Aussteifungselemente eine starke Dicke, wodurch die Faltung der Plane beeinträchtigt wird. Zwar wird bei dem bekannten Fahrzeugaufbau durch die Aussteifungselemente eine Koppelung zwischen den beiden Längsträgern erzielt, jedoch beulen sich im Belastungsfall beide Längsträger in dieselbe Richtung aus, so daß der Fahrzeugaufbau im Mittelbereich in der Art einer Banane - durch das Nachgeben der beiden Längsträger im Ergebnis doppelt - ausgebeult oder sogar verwunden wird. Ein weiterer bedeutender Nachteil besteht in der Befestigung der Enden der Aussteifungselemente an dem Endlaufspriegel, da die gesamte über die Aussteifungselemente übertragene Last die Lager der Rollen beansprucht und die Lebensdauer der Rollen entsprechend reduziert. Dasselbe gilt für die Spriegel, an denen die Ösen für die Umlenkung der Aussteifungselemente vorgesehen sind und deren Rollen die gesamte an den Aussteifungselement angreifende Last auf den Längsträger übertragen müssen, wodurch die Lager der horizontal geführten Rollen schnell beschädigt und entsprechend die Aussteifung des Dachbereichs wieder herabgesetzt wird. Schließlich ist aufgrund der mehrfachen Umlenkung der flexiblen Aussteifungselemente ein Zugparallelogramm definiert, das zum Ausgleich von auf einen Längsträger wirkenden Kräften an dem gegenüberliegenden Längsträger keine Schubkräfte übertragen kann, wodurch die Aussteifungselemente die eine Seite aufspreizen, wodurch überhöhte Kräfte in die Plane eingeleitet und diese beschädigt werden kann.

Es ist Aufgabe der Erfindung, einen Fahrzeugaufbau nach dem Oberbegriff des Anspruchs 1 bzw. eine Dachhaut nach dem Oberbegriff des Anspruchs 20 zu schaffen, die einer seitlichen Durchbiegung einen erhöhten Widerstand entgegenstellen.

Diese Aufgabe wird bei dem eingangs genannten Fahrzeugaufbau bzw. bei der eingangs genannten Dachhaut erfindungsgemäß mit den kennzeichnenden Merkmalen des Anspruchs 1 bzw. 20 gelöst.

Der erfindungsgemäße Fahrzeugaufbau vermeidet es, ein Aussteifungselement oder Verstärkungsglied im geschlossenen Zustand des Daches die Dachöffnung diagonal, also von einer Ecke in die diametral gegenüberliegende, überspannen zu lassen und schafft statt dessen eine Anordnung, bei der besonders durch Ausbiegen gefährdete Bereiche eines Längsträgers mit zwei besonders stabilen Orten im Bereich des gegenüberliegenden Längsträgers gekoppelt werden.

Bei dem erfindungsgemäßen Fahrzeugaufbau ist im geschlossenen Zustand des Verdecks stets ein erstes Ende des wenigstens einen Verstärkungsgliedes in einem vorderen Eckbereich angeordnet, bei einem Schiebeverdeck also im Bereich des von Eckpfosten, vorderen Querträger und Längsträger gebildeten Knotens, wahlweise an dem Längsträger oder an dem Querträger festgelegt. Das andere Ende des wenigstens einen Verstärkungsgliedes ist in diesem Fall an derselben Längsseite im Bereich des hinteren Eckbereichs angeordnet, der durch den Eckpfosten, hinteren Querträger und denselben Längsträger wie für den vorderen Eckbereich angeordnet ist, wobei im Unterschied zu der bevorzugten ortsfesten Anbindung im vorderen Eckbereich im hinteren Eckbereich die Anbindung an einem zur Freigabe des Daches vorgesehenen Teil vorgesehen ist, das entlang der Längsseiten verlagerbar ist, beispielsweise dem hinteren Spriegel oder aber einem an dem hinteren Spriegel angeordneten Element, das im geschlossenen Zustand des Verdecks vorzugsweise formschlüssig und/oder kraftschlüssig ortsfeste Teile hintergreift und im übrigen mit den Spriegeln verfahrbar ist, nachdem es aus der hintergreifenden Position zum Beispiel angehoben wurde. Ein solches Element ist vorzugsweise der Portalbalken, der bei Schiebeverdecken ohnehin zum Verriegeln des Verdeckgestells vorgesehen ist und der durch die hierfür vorgesehene Schwenkbewegung vorteilhaft beim Schließen des Verdecks das Verstärkungsglied spannt und beim Öffnen entspannt. Hierdurch wird die auf den Portalbalken ausgeübte Zugkraft des Verstärkungsgliedes direkt in die hinteren Aufbauten wie den Eckpfosten eingeleitet, gegen die sich der Portalbalken abstützt, wodurch die Kräfte nicht von den Rollen des hinteren Spriegels und deren Lager in die jeweilige Führung eingeleitet werden, wodurch die Lebensdauer der Rollen erhöht wird.

Der Zugpunkt ist vorzugsweise an einem Spriegel angeordnet, an dem das Verstärkungsglied umgelenkt wird, so daß in dem nahe der anderen Längsseite angeordneten Zugpunkt Zugkräfte in Richtung auf die eine Längsseite wirksam werden, während die übrigen Spriegel außerhalb des Zugpunktes eine Umlenkung dieses Verstärkungsgliedes nicht erfahren. Wenn von einem Zugpunkt die Rede ist, kann dieser auch auf eine Strecke eindimensional ausgedehnt sein, indem ein erster Umlenkbereich und ein zweiter Umlenkbereich an der anderen Längsseite zum Beispiel in zwei vorzugsweise , aber nicht zwangsläufig benachbarten, Spriegeln vorgesehen sind, so daß die Strecke zwischen den beiden Spriegeln statt des in Draufsicht die beiden Schenkel eines Dreiecks zur Basis der einen Längsseite bildenden Musters statt dessen auf diese Basis ein Trapez setzt.

Vorzugsweise sind an einer Längsseite mehr als nur ein einziges Verstärkungsglied vorgesehen, zum Beispiel zwei, drei oder mehr, welche weiteren Verstärkungsglieder jeweils einem Zugpunkt zugeordnet sind. So kann bei zwei Verstärkungsgliedern der Zugpunkt des ersten Verstärkungsgliedes im Bereich von etwa einem Drittel und der Zugpunkt des zweiten Verstärkungsgliedes im Bereich von etwa zwei Dritteln der Landeraumlänge vorgesehen sein. Hierdurch können für die Übertragung derselben Gesamtkräfte flexiblere Verstärkungsglieder ausgewählt werden, die sich leichter beim Öffnen des Verdeckgestells biegen lassen. Vorzugsweise sind die mehreren Verstärkungsglieder an gemeinsamen Punkten der einen Längsseite festgelegt.

Die Erfindung ermöglicht eine Verstärkung und Versteifung der flexiblen Dachhaut in seitlicher Richtung bei geschlossenem Dach, ohne die Flexibilität der Dachhaut in Längsrichtung wesentlich zu beeinträchtigen. Diese verbesserte Steifigkeit wird durch einen einfachen, kostengünstigen und praktisch wartungs- und verschleißfreien Aufbau erzielt.

Werden mindestens zwei Verstärkungsglieder sich überschneidend und in längssymmetrischer, mindestens doppelter X-Form angeordnet, so ist eine optimale Versteifung in beide Querrichtungen und über längere Tragrahmen erzielt.

Wird die Dachhaut bei einem Schiebeverdeck mit einer vorderen Stimwandhaube und/oder einem hinteren, auf den Längsträgem verschiebbaren Portalbalken eingesetzt, so kann der Querträger durch die Stimwandhaube und/ oder durch den Portalbalken gebildet sein. Dann kann die Öffnungsfunktion des Daches ohne jegliche Bedienungseinschränkung voll aufrecht erhalten werden und die Spannung des Verstärkungsgliedes erfolgt synchron mit dem Schließen durch Verschieben des Daches.

Noch einfacher und leichter wird die Bedienung, wenn bei mindestens einem verschwenkbaren Portalbalken das Verstärkungsglied an dem Portalbalken befestigt ist. Dann kann mit einfachen Mitteln, ähnlich einem Hebelverschluß, die Befestigung derart ausgebildet sein, daß das Verstärkungsglied durch das Verschwenken des Portalbalkens in die Schließstellung gespannt ist.

Zur Überwachung der Schließfunktion kann vorgesehen werden, daß eine elektrische Kontaktvorrichtung angeordnet ist, die durch das Verschwenken des Portalbalkens betätigt wird. Dann kann gleichzeitig ordnungsgemäßes Schließen des Portalbalkens einerseits und ordnungsgemäßes Spannen des Verstärkungsgliedes andererseits festgestellt werden.

Ist ein flexibler Heckabschluß vorhanden, dann können die Verstärkungsglieder weitergeführt sein und auch zur Verstärkung des flexiblen Heckbereichs nach Art einer Kreuzverspannung dienen.

Damit das Verstärkungsglied sich ohne jede Störung einer zusammenschiebbaren Dachhaut anpassen kann, ist das Verstärkungsglied an der Dachhaut angebunden. Dem gleichen Zweck dient es, wenn mindestens ein längs der Längsträger verschiebbarer Spriegel vorgesehen ist, daß das Verstärkungsglied an dem Spriegel angebunden ist.

Die bei Spriegeln eines Schiebeverdecks üblichen, die Seitenführung übernehmenden Rollen entfallen vorzugsweise bei der Befestigung des Verstärkungsglieds am Längsträger, also bei demjenigen Teil, welchen den Zugpunkt an den Längsträger koppelt, in der Regel ein Spriegel. Dieser Spriegel ist vielmehr am Längsträger über flächige Gleitstücke befestigt. Diese können die bei dem Spannen des Verstärkungsgliedes auftretenden Kräfte besser aufnehmen und in den Längsträger leiten.

Das Verstärkungsglied kann an den Knotenpunkten oder Endpunkten mittels Schnellverbindungsmitteln, wie Karabinerhaken, befestigt sein.

Allen Anforderungen gerecht wird ein Verstärkungsglied, das als mit Kunststoff ummanteltes Stahlseil ausgebildet ist. Es ist flexibel, langlebig und wartungsfrei.

Die Erfindung schafft somit einen Fahrzeugaufbau, dessen Seitenwände bei Belastung durch Ladegut nur eine geringe Durchbiegung aufweisen.

Vorzugsweise ist zwischen den Längsträgern und dem Fahrzeugchassis eine belastbare Seitenwand angeordnet. Diese Seitenwand kann mit den Längsträgem und dem Fahrzeugchassis fest, aber lösbar, verbunden sein. Dies kann geschehen, indem die Seitenwand als mit Querspriegeln oder Rungen verstärkte Plane ausgebildet ist. Die auf die Seitenwand wirkenden Kräfte werden einerseits nach unten, in das starre Fahrzeugchassis und andererseits nach oben, in die Längsträger abgeleitet. Durch die Versteifung des Daches können sich die Längsträger und somit die damit verbundenen Seitenwände nicht mehr so sehr durchbiegen. Dieser Aufbau eignet sich besonders gut zum Transport von Stückgut oder Getränkeaufbauten, da seitliche Ladungssicherungskräfte gut aufgenommen werden und die Aussteifung der beweglichen Dachflächen im Fahrbetrieb gesichert ist, ohne die Öffnungsfunktion zum Ladevorgang zu beeinträchtigen.

Weitere Vorteile und Merkmale der Erfindung ergeben sich aus der nachfolgenden Beschreibung sowie aus den abhängigen Ansprüchen.

Die Erfindung wird nachstehend unter Bezugnahme auf die anliegenden Zeichnungen anhand eines bevorzugten Ausführungsbeispieles näher erläutert.
- Fig. 1: zeigt eine perspektivische Ansicht eines beladenen Lastkraftwagen mit einem transparent gezeichnetem Aufbau.
- Fig. 2: zeigt eine Draufsicht auf einen erfindungsgemäße Fahrzeugaufbau.
- Fig. 3: zeigt einen vergrößerten Ausschnitt III aus Fig. 2 im Bereich der Anbindung eines Verstärkungsgliedes an eine Längsseite.
- Fig. 4: zeigt eine Draufsicht auf einen alternativen erfindungsgemäßen Fahrzeugaufbau.
- Fig. 5: Zeigt eine teilweise geschnittene Seitenansicht entsprechend der Linie V-V in Fig. 3.
- Fig. 6: zeigt den hinteren Endbereich des Fahrzeugaufbaus aus Fig. 2 mit hochgeklapptem Portalbalken.
- Fig. 7: zeigt den Endbereich aus Fig. 6 mit heruntergeklapptem, Portalbalken.
- Fig. 8: zeigt den Endbereich nach Fig. 6 in der Draufsicht und in vergrößertem Maßstab.

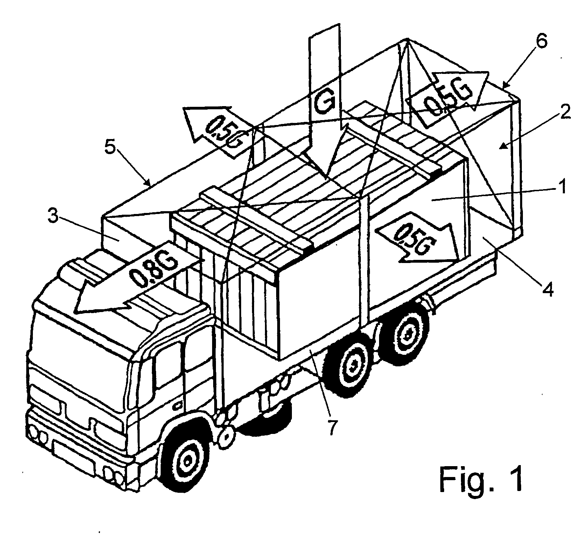

In Fig. 1 ist verdeutlicht, wie das Gewicht G der Ladung 1 eines Nutzfahrzeugs auf den Aufbau 2 einwirken kann: 0,8 G wirken nach vome auf die Vorderwand 3 und je 0,5 G wirken auf die Seitenwände 4 und 5 und auf die Rückwand 6. Diese Werte können sich bei entsprechenden Umständen, wie Bremsen, Kurvenfahrt und Beschleunigen, einstellen und müssen in das Fahrzeugchassis eingeleitet werden.

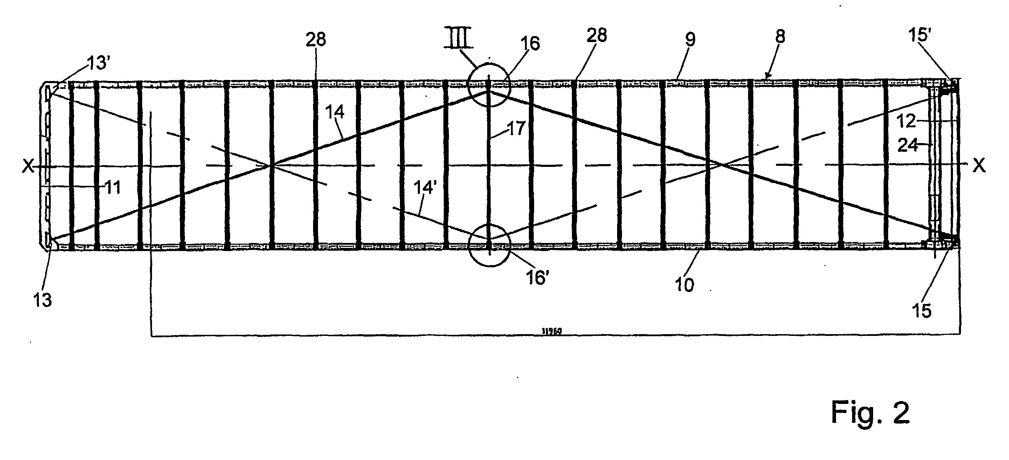

In Fig. 2 besteht ein rechteckiger Tragrahmen 8 eines Schiebeverdecks aus zwei Längsträgern 9 und 10 sowie aus einem vorderen und einem hinteren Querträger. Der vordere Querträger ist als Stimwandhaube 11 ausgebildet, der hintere als verschwenkbarer Portalbalken 12. Im Knotenbereich 13, Längsträger 10 / Querträger 11, ist an der Längsseite des Tragrahmens 8 ein Ende eines Verstärkungsglieds in Form eines mit Kunststoff ummantelten Seiles 14 befestigt. Im Knotenbereich 15, Längsträger 10 / Portalbalken 12, ist an derselben Längsseite des Tragrahmens 8 das andere Ende befestigt. Die Befestigung kann über beliebige Mittel oder Schnellbefestigungsmittel, wie Karabinerhaken, erfolgen.

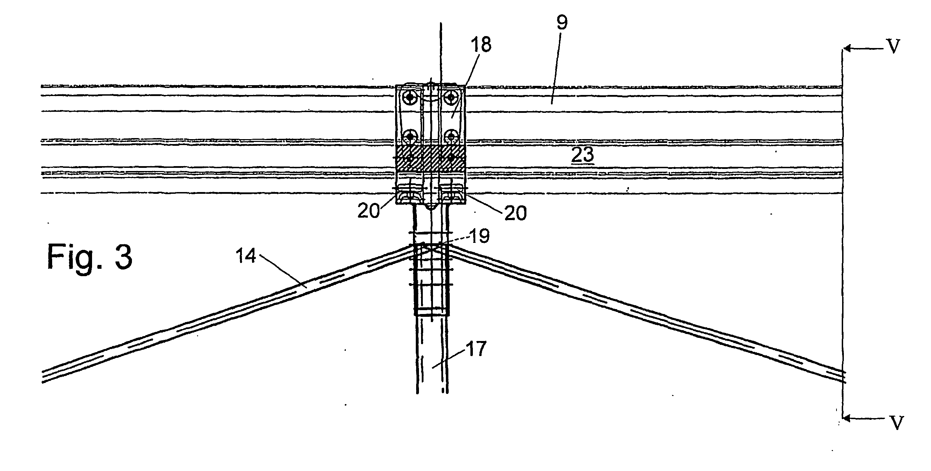

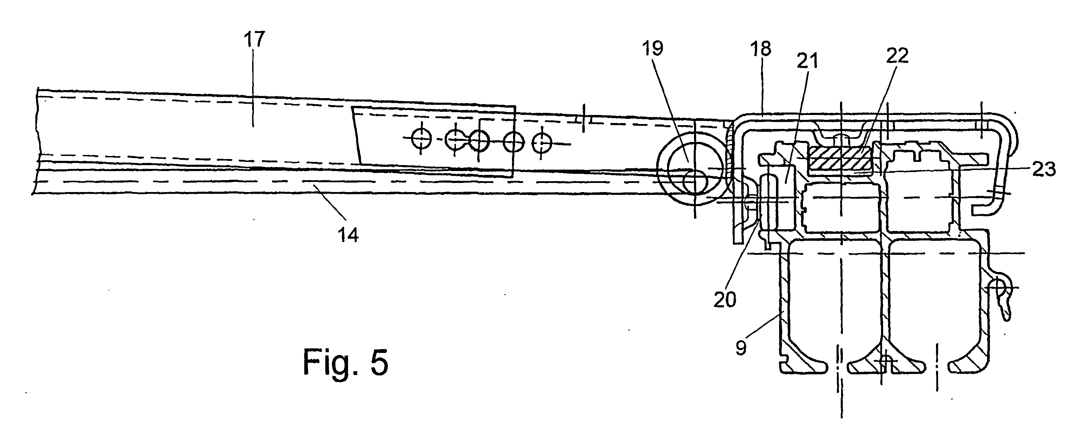

Das Seil 14 ist in seinem mittleren Bereich an dem mittleren Zwischenbereich 16 des anderen Längsträgers 9 befestigt, näheres ist Fig. 3 und 5 zu entnehmen.

Angedeutet ist ein zweites Seil 14', das genau symmetrisch zur Längsachse X-X des Tragrahmens 8 angeordnet ist, mit den Knoten 13' und 14', sowie dem mittleren Zwischenbereich 16' des Längsträgers 10. Die beiden Seile 14 und 14' überschneiden sich und bilden zusammen eine doppelte X-Form. Dadurch ist der Tragrahmen 8 gleichmäßig in seiner Hauptebene verstärkt und versteift.

In Fig. 3 und 5 ist sichtbar, wie das Seil 14 an einem Spriegel 17 befestigt ist, der wiederum als Rollwagen 18 endet. Dabei ist das Seil 14 durch eine Bohrung 19 im Spriegel 17 geführt. Vorzugsweise wird das Seil 14 in der Bohrung 19 festgelegt, um ein Verrutschen zu vermeiden. Der Rollwagen 18 läuft mit zwei senkrechten Rollen 20 in einer seitlichen Führungsschiene 21 und gleitet über ein längliches, flächiges Gleitstück 22 in einer oberen Führungsschiene 23 des Längsträgers 9.

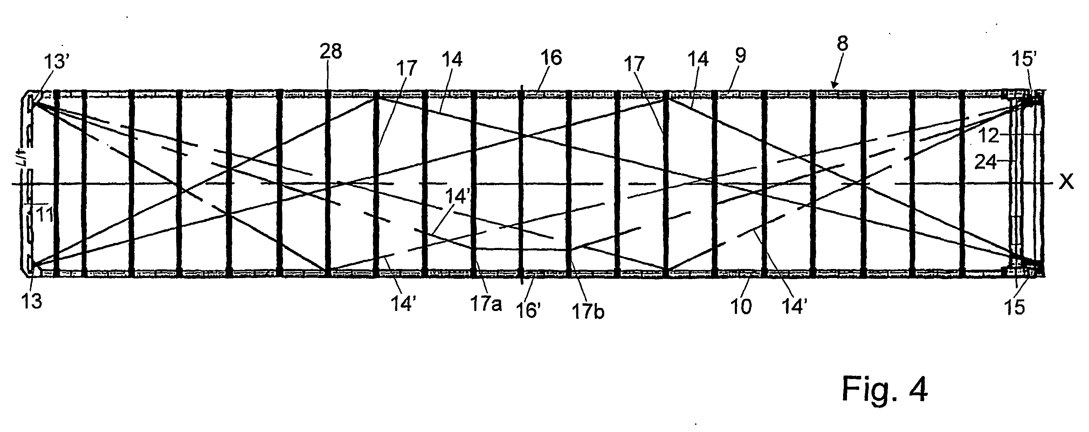

Fig. 4 zeigt eine alternative Ausgestaltung eines Fahrzeugaufbaus, bei dem zwei Seile 14 jeweils an denselben Knoten 13, 15 abgehen und an zwei verschiedenen Zugpunkten 19 zweier Spriegel 17 festgelegt sind, die die Länge der Ladefläche etwa dritteln. Femer sind drei Seile 14' gezeigt: ein erstes greift an demselben Spriegel wie eines der Seile 14 an, ein anderes Seil 14' greift an einen benachbarten Spriegel zu dem des Seils 14 an und noch ein weiteres Seil verbindet Zugpunkte 19 je eines Spriegels 17a und eines Spriegels 17b, so daß statt des Dreiecks Knoten-Zugpunkt-Knoten ein Trapez Knoten-Zugpunkt-Zugpunkt-Knoten entsteht.

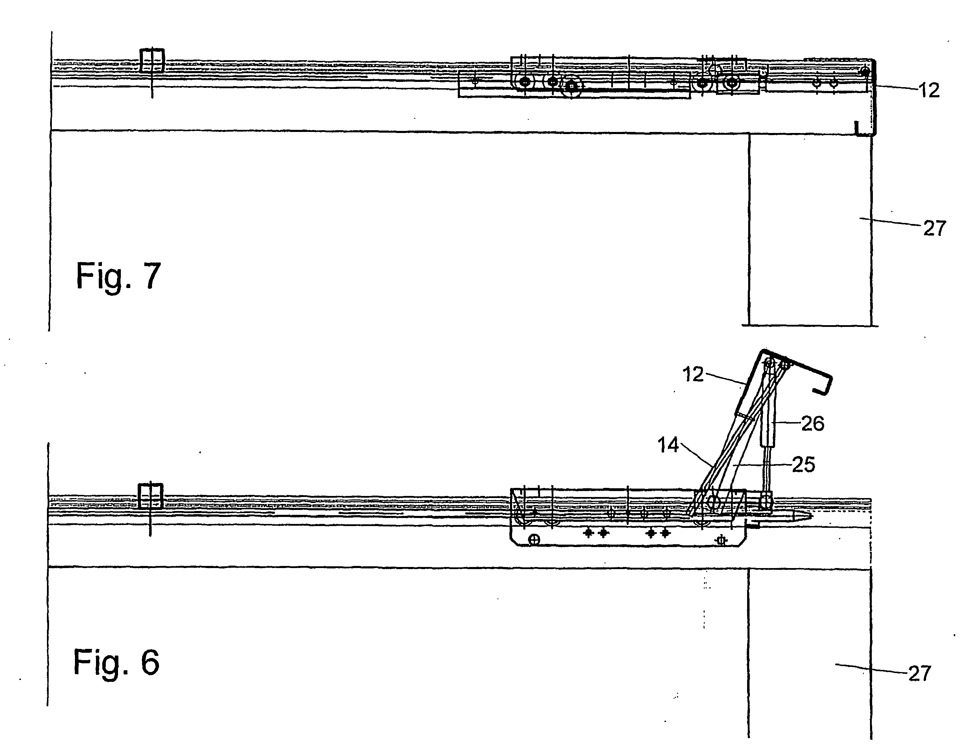

In Fig. 6 ist verdeutlicht, wie das Seil 14 an dem nach oben aufgeschwenkten, geöffneten Portalbalken 12 im Knotenpunkt 15 befestigt ist. Der Portalbalken 12 ist an einen weiteren längsverschiebbaren Querträger 24 über zwei Gelenke 25 angelenkt. Die Öffnungsbewegung wird durch eine Gasfeder 26 unterstützt.

In Fig. 7 ist der Portalbalken 12 heruntergeklappt und mit einer Stütze 27 verriegelt. Die Länge des Seiles 14 ist so ausgelegt bzw. eingestellt, daß beim Herunterklappen des Portalbalkens 12 das Seil 14 seine endgültige Spannung erhält.

In Fig. 2 ist verdeutlicht, wie bei einem Schiebeverdeck eine Vielzahl von Spriegeln (Bezugszeichen weggelassen) zwischen den Längsträgern 9 und 10 angeordnet sein können, die wiederum die nicht dargestellte Dachhaut, z.B. eine Plane, tragen. Die Spriegel 28 und die Dachhaut können, vorzugsweise punktuell oder abschnittsweise, mit dem Seil 14 verbunden sein.

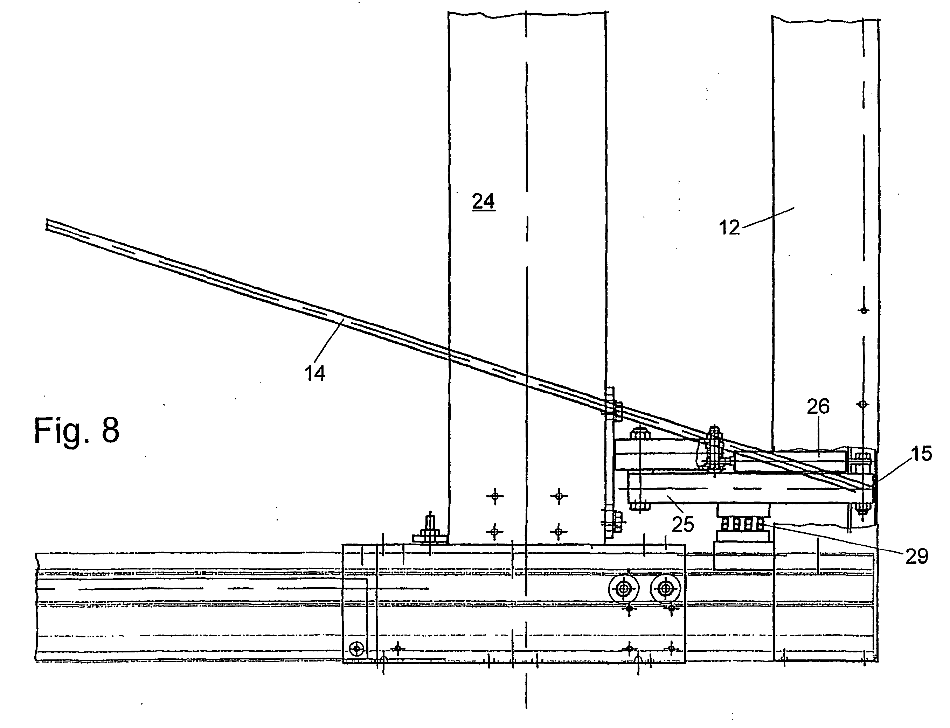

In Fig. 8 ist eine elektrische Kontaktvorrichtung 29 dargestellt, welche durch das Verschwenken des Portalbalkens 12 in seine Schließstellung, Fig. 7, gebracht wird und dadurch über entsprechende Anzeigemittel einen ordnungsgemäßen Schließzustand des Portalbalkens12 sowie die ordnungsgemäße Verspannung des Seils 14 signalisieren kann.

Die Erfindung ist vorstehend anhand eines Ausführungsbeispiels, das als Schiebeverdeck ausgebildet ist, erläutert worden. Es versteht sich, daß die Erfindung ebenso an einem Fahrzeugaufbau, der in der Bauart eines Schiebebügelverdecks ausgebildet ist, einsetzbar ist.

Somit umfaßt ein erfindungsgemäßer Fahrzeugaufbau mit einer Ladepritsche für das Stapeln eines Ladegutes, das von einem Gestell überbaut wird, auf welchem eine Plane aufliegt, und bei dem wahlweise nur Spriegel des Dachs entlang von Längsträgem, die über Rungen gegen die Ladepritsche abgestützt sind, verlagerbar sind, oder Spriegel des Dachs mit entlang der Ladepritsche verlagerbaren Rungen verbunden sind und gemeinsam mit diesen verlagerbar sind, gemäß dem Erfindungsgedanken wenigstens ein flexibles Verstärkungsglied in der Ebene der Spriegel, vorzugsweise als Seil ausgebildet, z.B. als Stahlseil, welches Verstärkungsglied wenigstens ein Dreieck bildet, welches mit wenigstens einem ersten Eckpunkt einerseits des Gestells eine Belastung auf zwei weitere Eckpunkte andererseits des Gestells verteilt (bei geschlossenem Gestell). Zweckmäßigerweise liegen die zwei weiteren Eckpunkte, zumindest aber einer der beiden, im Bereich einer oberen Ecke des Gestells. Zudem kann vorgesehen sein, daß das Seil im Bereich der Spriegel, die von Eckpunkt zu Eckpunkt gekreuzt werden, an diesem geführt ist, um ein tiefes Durchhängen bei geöffnetem Gestell zu vermeiden. Der wenigstens eine Eckpunkt lagert das Seil wahlweise mit einem Umlenkglied. Bei Anordnen von zwei Seilen, jeweils als Dreieck, so daß in jeder der vier oberen Ecken des Gestells ein Seil fixiert ist, ergibt sich in der Draufsicht ein Verlauf entsprechend einem doppelten X. Zweckmäßigerweise liegen dann die beiden wenigstens einen Eckpunkte der beiden Dreiecke einander gegenüber, und vorzugsweise im Bereich eines Spriegels.

Die Erfindung ist vorstehend anhand eines als durchgehendes Seil ausgebildeten Verstärkungsglieds beschrieben worden. Es versteht sich, daß das Verstärkungsglied auch aus mehreren Abschnitten von Verstärkungsseilen gebildet sein kann.

## Patentansprüche

1. Fahrzeugaufbau, insbesondere für Nutzfahrzeuge wie Kraftfahrzeuge und Schienenfahrzeuge, bei dem ein Verdeckgestell auf einer Ladepritsche abgestützt ist und einen Laderaum überspannt, wobei eine Dachhaut an verfahrbaren Spriegeln des Verdeckgestells anbringbar ist, bei dem in einer Ebene der Spriegel wenigstens ein flexibles Verstärkungsglied (14, 14') zur Dachaussteifung angeordnet ist,
**dadurch gekennzeichnet,**
**daß** das wenigstens eine flexible Verstärkungsglied (14, 14') an einem vorderen Eckbereich des Verdeckgestells und an einem hinteren verfahrbaren Spriegel im Bereich derselben Längsseite festgelegt ist, und
**daß** das wenigstens eine flexible Verstärkungsglied (14, 14') in wenigstens einem Zugpunkt in einem Bereich der anderen Längsseite gehaltert ist.

2. Fahrzeugaufbau nach Anspruch 1, **dadurch gekennzeichnet, daß** der Zugpunkt in einem Spriegel angeordnet ist.

3. Fahrzeugaufbau nach Anspruch 2, **dadurch gekennzeichnet, daß** der Spriegel an dem dem Zugpunkt zugeordneten Rollenwagen ein Gleitstück zur Führung des Spriegels aufweist, und
daß die Zugkräfte von Zugpunkt über Spriegel und Gleitstück in einen oberen Längsträger der anderen Längsseite eingeleitet werden.

4. Fahrzeugaufbau nach einem der Ansprüche 1 bis 3, **dadurch gekennzeichnet, daß** das wenigstens eine flexible Verstärkungsglied (14, 14') an einem an dem hinteren verfahrbaren Spriegel angeordneten Portalbalken festgelegt ist.

5. Fahrzeugaufbau nach Anspruch 4, **dadurch gekennzeichnet, daß** der Portalbalken bei geschlossenem Verdeckgestell an den hinteren Stützen des Verdeckgestells anliegt.

6. Fahrzeugaufbau nach Anspruch 4 oder 5, **dadurch gekennzeichnet, daß** der Portalbalken beim Übergang von geschlossenem Verdeckgestell zu geöffnetem Verdeck eine Schwenkbewegung ermöglicht.

7. Fahrzeugaufbau nach einem der Ansprüche 1 bis 6, **dadurch gekennzeichnet, daß** das Verdeckgestell ein Schiebevedeck ist, bei dem die Spriegel an auf Pfosten und Rungen gegen die Ladepritsche abgestützten Längsträgem verfahrbar sind.

8. Fahrzeugaufbau nach einem der Ansprüche 1 oder 2, **dadurch gekennzeichnet, daß** das Verdeckgestell ein Schiebebügelvedeck ist, bei dem die Spriegel als Schiebebügel an beiden Längsseiten der Ladepritsche abgestützt und verfahrbar sind.

9. Fahrzeugaufbau nach einem der Ansprüche 1 bis 8, **dadurch gekennzeichnet, daß** das wenigstens eine flexible Verstärkungsglied (14, 14') an den Zugpunkt angebunden ist.

10. Fahrzeugaufbau nach einem der Ansprüche 1 bis 8, **dadurch gekennzeichnet, daß** das wenigstens eine flexible Verstärkungsglied (14, 14') in dem Zugpunkt lose hindurchgeführt ist.

11. Fahrzeugaufbau nach einem der Ansprüche 1 bis 10, **dadurch gekennzeichnet, daß** zwei Verstärkungsglieder (14, 14') sich überschneidend und in längssymmetrischer, doppelter X-Form vorgesehen sind.

12. Fahrzeugaufbau nach einem der Ansprüche 1 bis 11, **dadurch gekennzeichnet, daß** an der einen Längsseite noch wenigstens ein weiteres flexibles Verstärkungsglied an demselben vorderen Eckbereich des Verdeckgestells und hinteren verfahrbaren Spriegel festgelegt ist, und daß das weitere flexible Verstärkungsglied (14, 14') in einem weiteren Zugpunkt in einem anderen Bereich der anderen Längsseite gehaltert ist.

13. Fahrzeugaufbau nach einem der Ansprüche 1 bis 12, **dadurch gekennzeichnet, daß** das Verstärkungsglied an den Knotenpunkten oder Endpunkten mittels Schnellverbindungsmitteln befestigt ist.

14. Fahrzeugaufbau nach einem der Ansprüche 1 bis 13, **dadurch gekennzeichnet, daß** das Verstärkungsglied als mit Kunststoff ummanteltes Stahlseil (14) ausgebildet ist.

15. Fahrzeugaufbau nach einem der Ansprüche 1 bis 14, **dadurch gekennzeichnet, daß** die Verstärkungsglieder weitergeführt sind und auch zur Verstärkung eines flexiblen Heckbereichs des Verdeckgestells nach Art einer Kreuzverspannung dienen.

16. Fahrzeugaufbau nach einem der Ansprüche 1 bis 15, **dadurch gekennzeichnet, daß** das Verstärkungsglied an der Dachhaut angebunden ist.

17. Fahrzeugaufbau nach einem der Ansprüche 1 bis 15, **dadurch gekennzeichnet, daß** das Verstärkungsglied in die Dachhaut integriert ist.

18. Fahrzeugaufbau nach einem der Ansprüche 1 bis 17, **dadurch gekennzeichnet, daß** das wenigstens eine Verstärkungsglied im Bereich der außerhalb des Zugpunktes vorgesehenen Spriegel durch Durchführungen hindurch geführt ist, die bei gespanntem Verstärkungsglied keine Zugkräfte aufnehmen.

19. Fahrzeugaufbau nach einem der Ansprüche 1 bis 18, **dadurch gekennzeichnet, daß** das wenigstens eine Verstärkungsglied zugfest ist.

20. Flexible Dachhaut, vorzugsweise für einen Fahrzeugaufbau nach einem der Ansprüche 1 bis 19, mit einem zugfesten Verstärkungsglied (14), das sich an einen rechteckigen Tragrahmen (8) aus zwei Längsträgern (9. 10) und zwei Querträgem (11, 12) und dieser über Stützen (27) an einem Fahrzeugchassis abstützt, **dadurch gekennzeichnet, daß** mindestens ein Verstärkungsglied (14) an der einen Längsseite des Tragrahmens (8) in den Knotenbereichen (13, 15) Längsträger/Querträger ortsfest und auf der anderen Längsseite mit einem zwischen den entsprechenden Knotenbereichen (13', 15') liegenden Zwischenbereich (16) des anderen Längsträgers (9) des Tragrahmens (8) längsverschiebbar verbunden ist.

## Claims

1. A vehicle structure, in particular for utility vehicles, such as motor vehicles and rail vehicles, in which a covering frame is supported on a loading platform and covers a loading area, it being possible for a roof skin to be attached to moveable bows of the covering frame, and in which at least one flexible reinforcing member (14, 14') is arranged in a plane of the bows in order to stiffen the roof,
**characterized in**
**that** the at least one flexible reinforcing member (14, 14') is fixed to a front corner region of the covering frame and to a rear, moveable bow in the region of the same longitudinal side, and
**that** the at least one flexible reinforcing member (14, 14') is secured in at least one point of traction in a region of the other longitudinal side.

2. The vehicle structure as claimed in claim 1, **characterized in that** the point of traction is arranged in a bow.

3. The vehicle structure as claimed in claim 2, **characterized in that** the bow has, on the roller carriage assigned to the point of traction, a sliding element for guiding the bow, and that the tractive forces from the point of traction are introduced via bow and sliding element into an upper longitudinal member of the other longitudinal side.

4. The vehicle structure as claimed in one of claims 1 to 3, **characterized in that** the at least one flexible reinforcing member (14, 14') is fixed to a portal beam arranged on the rear, moveable bow.

5. The vehicle structure as claimed in claim 4, **characterized in that**, when the covering frame is closed, the portal beam rests on the rear supports of the covering frame.

6. The vehicle structure as claimed in claim 4 or 5, **characterized in that** the portal beam permits a pivoting movement during the transfer from closed covering frame to open covering.

7. The vehicle structure as claimed in one of claims 1 to 6, **characterized in that** the covering frame is a sliding covering, in which the bows can be moved on longitudinal members supported toward the loading platform on posts and stakes.

8. The vehicle structure as claimed in either of claims 1 and 2, **characterized in that** the covering frame is a sliding-hoop-type covering, in which the bows in the form of sliding hoops are supported and can be moved on both longitudinal sides of the loading platform.

9. The vehicle structure as claimed in one of claims 1 to 8, **characterized in that** the at least one flexible reinforcing member (14, 14') is attached to the point of traction.

10. The vehicle structure as claimed in one of claims 1 to 8, **characterized in that** the at least one flexible reinforcing member (14, 14') is guided loosely through in the point of traction.

11. The vehicle structure as claimed in one of claims 1 to 10, **characterized in that** two reinforcing members (14, 14') are provided crossing over each other and in a longitudinally symmetrical, double X shape.

12. The vehicle structure as claimed in one of claims 1 to 11, **characterized in that** on the one longitudinal side at least one further flexible reinforcing member is fixed to the same front corner region of the covering frame and to the same rear, moveable bow, and **in that** the further flexible reinforcing member (14, 14') is secured in a further point of traction in another region of the other longitudinal side.

13. The vehicle structure as claimed in one of claims 1 to 12, **characterized in that** the reinforcing member is fastened to the points of intersection or end points by means of rapid connecting means.

14. The vehicle structure as claimed in one of claims 1 to 13, **characterized in that** the reinforcing member is designed as a steel cable (14) encased with plastic.

15. The vehicle structure as claimed in one of claims 1 to 14, **characterized in that** the reinforcing members are continued and are also used to reinforce a flexible rear region of the covering frame in the manner of diagonal bracing.

16. The vehicle structure as claimed in one of claims 1 to 15, **characterized in that** the reinforcing member is attached to the roof skin.

17. The vehicle structure as claimed in one of claims 1 to 15, **characterized in that** the reinforcing member is integrated in the roof skin.

18. The vehicle structure as claimed in one of claims 1 to 17, **characterized in that** the at least one reinforcing member is guided in the region of the bows provided outside the point of traction through bushings which do not absorb any tractive forces when the reinforcing member is tensioned.

19. The vehicle structure as claimed in one of claims 1 to 18, **characterized in that** the at least one reinforcing member is resistant to being extended.

20. A flexible roof skin, preferably for a vehicle structure as claimed in one of claims 1 to 19, having a reinforcing member (14) which is resistant to being extended, which roof skin is supported on a rectangular supporting frame (8) comprising two longitudinal members (9, 10) and two transverse members (11, 12) and said supporting frame is supported on a vehicle chassis via supports (27), **characterized in that** at least one reinforcing member (14) on the one longitudinal side of the supporting frame (8) is connected in a positionally fixed manner in the regions of intersection (13, 15) of longitudinal member/transverse member and, on the other longitudinal side, is connected in a longitudinally displaceable manner to an intermediate region (16) of the other longitudinal member (9) of the supporting frame (8), said intermediate region lying between the corresponding regions of intersection (13', 15').

## Revendications

1. Structure de véhicule, en particulier de véhicule utilitaire tel que des véhicules automobiles et des véhicules ferroviaires, dans laquelle
un bâti de bâche est supporté par une plate-forme de chargement et délimite un espace de chargement,
une couverture de toit peut être montée sur des arceaux déplaçables du bâti de bâche et
au moins un élément de renforcement (14, 14') est prévu dans un plan des arceaux en vue de renforcer le toit,
**caractérisée en ce que**
l'au moins un élément de renforcement flexible (14, 14') est fixé au niveau de la région d'angle avant du bâti de bâche et au niveau de l'arceau déplaçable arrière du même côté longitudinal, et
l'au moins un élément de renforcement flexible (14, 14') est supporté en au moins un point de traction de l'autre côté longitudinal.

2. Structure de véhicule selon la revendication 1, **caractérisée en ce que** le point de traction est situé dans un arceau.

3. Structure de véhicule selon la revendication 2, **caractérisée en ce que**
l'arceau se trouvant sur le chariot roulant associé au point de traction comporte une pièce coulissante destinée au guidage de l'arceau, et
les forces de traction sont dirigées du point de traction jusque dans un longeron supérieur de l'autre côté longitudinal via l'arceau et la pièce coulissante.

4. Structure de véhicule selon l'une des revendications 1 à 3, **caractérisée en ce que** l'au moins un élément de renforcement flexible (14, 14') est fixé à une poutre de portique située au niveau de l'arceau déplaçable arrière.

5. Structure de véhicule selon la revendication 4, **caractérisée en ce que** la poutre de portique porte contre le support arrière du bâti de bâche lorsque le bâti de bâche est fermé.

6. Structure de véhicule selon la revendication 4 ou 5, **caractérisée en ce que** la poutre de portique permet un mouvement de pivotement lorsque le bâti de bâche passe de l'état fermé à l'état ouvert.

7. Structure de véhicule selon l'une des revendications 1 à 6, **caractérisée en ce que** le bâti de bâche est une bâche coulissante dans laquelle les arceaux sont déplaçables sur des longerons supportés par des montants et des colonnes portant contre la plate-forme de chargement.

8. Structure de véhicule selon l'une des revendications 1 ou 2, **caractérisée en ce que** le bâti de bâche est une bâche à étriers coulissants dans laquelle les arceaux sont supportés et sont déplaçables en tant qu'étriers coulissants des deux côtés longitudinaux de la plate-forme de chargement.

9. Structure de véhicule selon l'une des revendications 1 à 8, **caractérisée en ce que** l'au moins un élément de renforcement flexible (14, 14') est relié au point de traction.

10. Structure de véhicule selon l'une des revendications 1 à 8, **caractérisée en ce que** l'au moins un élément de renforcement flexible (14, 14') est passé de façon amovible dans le point de traction.

11. Structure de véhicule selon l'une des revendications 1 à 10, **caractérisée en ce qu'**il est prévu deux éléments de renforcement (14, 14') qui se coupent et qui forment un double X à symétrie longitudinale.

12. Structure de véhicule selon l'une des revendications 1 à 11, **caractérisée en ce qu'**au moins un autre élément de renforcement flexible est fixé, sur l'un des côtés longitudinaux, au niveau de la même région d'angle avant du bâti de bâche et au niveau du même arceau déplaçable arrière et **en ce que** l'autre élément de renforcement flexible (14, 14') est supporté dans un autre point de traction dans une autre région de l'autre côté longitudinal.

13. Structure de véhicule selon l'une des revendications 1 à 12, **caractérisée en ce que** l'élément de renforcement est fixé aux points nodaux ou bien aux points d'extrémité à l'aide de moyens de liaison rapide.

14. Structure de véhicule selon l'une des revendications 1 à 13, **caractérisée en ce que** l'élément de renforcement est conformé en câble d'acier (14) gainé de matière plastique.

15. Structure de véhicule selon l'une des revendications 1 à 14, **caractérisée en ce que** les éléments de renforcement sont continus et servent également à renforcer une région arrière flexible du bâti de bâche à la manière d'un haubanage en croix.

16. Structure de véhicule selon l'une des revendications 1 à 15, **caractérisée en ce que** l'élément de renforcement est relié à la couverture de toit.

17. Structure de véhicule selon l'une des revendications 1 à 15, **caractérisée en ce que** l'élément de renforcement est intégré dans la couverture de toit.

18. Structure de véhicule selon l'une des revendications 1 à 17, **caractérisée en ce que**, au niveau des arceaux prévus à l'extérieur du point de traction, l'au moins un élément de renforcement est guidé dans des passages qui ne reçoivent aucune force de traction lorsque l'élément de renforcement est tendu.

19. Structure de véhicule selon l'une des revendications 1 à 18, **caractérisée en ce que** l'au moins un élément de renforcement est résistant à la traction.

20. Couverture de toit flexible, avantageusement pour structure de véhicule selon l'une des revendications 1 à 19, comportant un élément de renforcement (14) résistant à la traction qui est supporté par un cadre de support rectangulaire (8) qui est constitué de deux longerons (9, 10) et de deux traverses (11, 12) et qui est lui-même supporté par un châssis de véhicule via des supports (27), **caractérisée en ce qu'**au moins un élément de renforcement (14) est relié fixe sur un côté longitudinal du cadre de support (8) dans les régions nodales (13, 15) des longerons/traverses et, de l'autre côté longitudinal, est relié de façon à pouvoir se déplacer longitudinalement sur une région intermédiaire (16), entre les régions nodales (13', 15') correspondantes, de l'autre longeron (9) du cadre de support (8).
